# EUROPEAN PATENT APPLICATION

(11) **EP 2 614 723 A1**
(43) Date of publication of application: **17.07.2013**
(21) Application number: 12000220.9
(22) Date of filing: 16.01.2012
(51) Int. Cl.: A23G 7/00

(54) **Cooler for confectionary items**

(71) Applicant: GEA CFS Weert B.V., 6006 RV Weert (NL)
(72) Inventor: Houben, Eric Joseph Elizabeth, 5988 JS Helden (NL); Baumeister, Bruno Gerfried, 52078 Aachen (DE)
(74) Representative: Wolff, Felix

(57) **Abstract**

The present invention relates to a process to cool confectionary items, particularly lollipops in a cooler with transport means which convey the confectionary item through the cooler in a transport direction.

## Description

The present invention relates to a process to cool confectionary items, particularly lollipops in a cooler with transport means which convey the confectionary item through the cooler in a transport direction.

Such coolers are known from the state of the art. Particularly when cooling lollipops with a spherical shaped head, whose sugar type material is still so warm and thus so soft that the head tends to deform, it is important, that the lollipops are moved during cooling, i.e. that the spherical head of the lollipop rotates along the transportation means, preferably constantly or with only short interruptions. In the coolers according to the state of the art, this is achieved by moving a sloped transportation means, for example a plate, perpendicular to the transport direction of the lollipop. While rotating, the lollipops move stochastically in their transport direction, i.e. from the inlet to the outlet of the cooler. However, these processes are rather complicated. The cooler needs to be covered by a housing to avoid accidents and these coolers are rather difficult to empty, if needed.

It was therefore the objective of the present invention to provide a process that does not comprise the deficiencies according to the state of the art.

This problem is solved by a process to cool confectionary items, particularly lollipops, in a cooler with a transportation means, which convey the confectionary items through the cooler in a transport direction, whereas the transportation means are advanced in the transport direction and reversed according to a cycle or at random.

The present invention relates to a process to cool confectionary items, particularly lollipops. These confectionary items need to be cooled after they have been formed into their desired shape but are still so warm, that they tend to deform easily during the further production process. The cooling takes place in a cooler which comprises transportation means, for example a transportation belt which transports the confectionary item from an inlet to an outlet in a transportation direction. During transportation, the confectionary item is cooled by free- or forced convection, conduction and/or radiation. According to the present invention, the transportation means is not only advanced in the transport direction but also reverse, i.e. moved opposite to the transport direction, according to a cycle or at random. For example, the transportation means are advanced and reversed, alternating. However, it is also possible, that a multitude of advancing steps is followed by a single reverse step or a single advancement step is followed by a multitude of reverse steps or a multitude of advancement steps is followed by a multitude of reversing steps. The transportation means are only moved back and forth parallel to the transport direction of the confectionary item from the inlet to the outlet. The transportation means is preferably not moved in an angle relative to the transport direction.

Due to this movement of the belt, the confectionary items are, at least essentially, constantly in motion and thus do not or not significantly deform due to their weight. In case the cooler needs to be emptied, the transportation means are only advanced and not reversed and thus the cooler is quickly and reliably emptied.

Preferably, the transportation means is an endless belt which is arranged around at least two rolls. The belt is preferably tensioned between the rolls. The belt is driven by rotating at least one roller, for example by a motor, which can be controlled according to the needs of the process. This roller is turned clockwise and counter-clockwise to achieve the advancement of the belt in the transport direction and the backward movement of the belt. This belt is not moved in an angle, for example perpendicular to the transport direction.

Preferably, the advancement of the transportation means in the transport direction is larger than the retracting movement. For example, the transportation means is advanced by a distance x, for example 100 cm, then stopped and then reversed by distance < x, for example 80 cm, during one cycle. Thus, during one cycle, the belt is advanced by a distance of x - <x. However, the overall movement of the transportation means during one cycle is x + <x. The confectionary item is, at least essentially, during the entire movement of the transportation means in motion; i.e. it rolls.

Preferably, the movement of the transportation means is controlled and/or the surface of the transportation means is designed such that there is always rolling friction between the confectionary item and the surface of the transportation means and more preferably no sliding friction, because sliding friction causes the confectionary not to turn during the motion of the belt and can consequently causes deformation of the confectionary item.

According to another preferred embodiment of the present invention, the transportation means is advanced or reversed after is has been decelerated, for example stopped, whereas the acceleration is preferably larger than the deceleration. This results in a rolling movement of lollipops with, for example, a spherical-, elliptical- or cylindrical head.

Preferably, the transportation velocity decreases with increasing transport distance, which, under steady state conditions, results in an increased density of the confectionary items on the transportation means with increasing transportation distance; i.e. an increased density of confectionary item on the transportation means towards the outlet of the cooler.

According to another preferred embodiment, the cooling process is carried out on different height levels. Even more preferably, the confectionary items slide or drop from one height level to the next lower height level.

Preferably, the transportation means are cleaned more preferably at a regular interval. This is preferably carried out with a cleaning agent. After the cleaning, the transportation means are preferably dried, more preferably air dried.

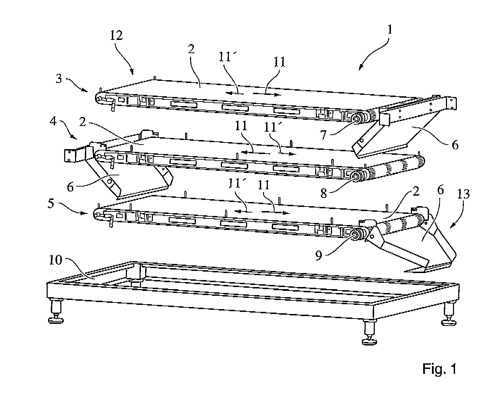

The invention is now explained according to a single figure 1.

In this single figure 1, a cooler is displayed in which the inventive process can be carried out. This cooler comprises transportation means 2, here three, preferably endless belts, which transport the confectionary items, particularly lollipops, more particularly lollipops with a round or spherical head, in a transportation direction 11 from an inlet 12 of the cooler to an outlet 13 of the cooler. In the present example, the cooler comprises three levels 3, 4, 5 along which the confectionary item are transported. The transportation means is, in the present example, designed as endless belts, each being driven by drive means 7, 8, 9, here a rotating roller, respectively, each driven by a motor. The person skilled in the art understands, that the cooler can comprise less or more endless belts. Flow-wise at the end of each belt, there is a transport means 6, here a chute, along which the confectionary items slide from one level to the next level. According to the present invention, each transportation means, here the endless belt, is not only moved in the transport direction 11 but also into the opposite direction 11' at random or at a given interval/cycle. For example, the transportation means 2 is, during one cycle moved in the transport direction, stopped and then reversed, followed by the next cycle and so on. For example, the transportation means 2 is advanced by 100 cm and then reversed by 80 cm. This results in a movement of 180 cm, while the overall transportation distance of the belt and thus the lollipop is only 20 cm. The sequential cycles can are preferably identical but can also differ from each other. The movement of the transportation means can be individually programmed for each and every type of confectionary item. Preferably during the entire movement of the belt and more preferably even after the belt has been stopped, it is preferred, that the confectionary item moves, e.g. rolls, along the belt. This ensures that the confectionary item to be cooled does not rest for an extended period of time on a certain part of its circumference and thus deforms under its weight. Preferably, the acceleration of the transportation means is larger than the deceleration. This results in a more or less constant movement of the lollipops relative to the belt. In case the cooler needs to be emptied, the drives only move the belts only in the direction 11, i.e. only in the transport direction, from the inlet towards the outlet of the cooler and not reverse. This assures a fast and reliable emptying of the cooler. In this mode, it is also possible to cool flat confectionary items, e.g. flat lollipops, which do not need to move relative to the transportation means during cooling. Each drive 7, 8, 9 can be operated jointly or individually. The transportation means 2 at the different levels can be operated with one motor and for example a transmission, for example a chain or a toothed belt. Each roller that drives the respective belt may be connected to a sprocket that is driven by the transmission. The sprockets of the individual transportation means may vary in size.

Since the transportation means 2 only advance and reverse around stationary rollers, the transportation means 2 can be arranged in a frame 10 without providing a security cover.

### List of reference signs:

- 1: cooler
- 2: transportation means, transportation belt
- 3: unit, level
- 4: unit, level
- 5: unit, level
- 6: transfer means, chute
- 7: drive for level 3, roller
- 8: drive for level 4, roller
- 9: drive for level 5, roller
- 10: frame
- 11: transport direction
- 11': reverse direction
- 12: inlet
- 13: outlet

## Claims

1. Process to cool confectionary items, particularly lollipops, in a cooler (1) with transportation means (2), which convey the confectionary items through the cooler (1) in a transport direction (11), **characterized in that** the transportation means (2) are advanced in the transport direction (11) and reversed according to a cycle or at random.

2. Process according to claim 1, **characterized in, that** the advancement of the transportation means in the transport direction (11) is larger than the retracting movement.

3. Process according to one of the preceding claims, **characterized in, that** the transportation means (2) are advanced and stopped or reversed and stopped, whereas the acceleration is larger than the deceleration.

4. Process according to one of the preceding claims, **characterized in, that** transportation velocity decreases with increasing transport distance.

5. Process according to one of the preceding claims, **characterized in, that** the cooling is carried out on different height levels (3, 4, 5).

6. Process according to claim 5, **characterized in, that** the confectionary items slide or drop from one height level (3, 4, 5) to the next lower one (4, 5).

7. Process according to one of the preceding claims, **characterized in, that** the transportation means are cleaned.
